Europäisches Patentamt

European Patent Office

Office européen des brevets

(11) Veröffentlichungsnummer: **0 325 748**

**A1**

## (12) EUROPÄISCHE PATENTANMELDUNG

(21) Anmeldenummer: 88120583.5

(22) Anmeldetag: 09.12.88

(51) Int. Cl.⁴: **B65G 47/16** , **B65G 47/12**

(30) Priorität: 16.12.87 DE 3742583

(43) Veröffentlichungstag der Anmeldung:
02.08.89 Patentblatt 89/31

(84) Benannte Vertragsstaaten:
**AT BE CH DE ES FR GB IT LI NL**

(71) Anmelder: **Carsjens, Ullrich**
**Rheydter Strasse 284**
**D-4050 Mönchengladbach 1(DE)**

(72) Erfinder: **Carsjens, Ullrich**
**Rheydter Strasse 284**
**D-4050 Mönchengladbach 1(DE)**

(74) Vertreter: **Bonsmann, Manfred, Dipl.-Ing.**
**Kaldenkirchener Strasse 35a**
**D-4050 Mönchengladbach 1(DE)**

(54) **Abstreifvorrichtung für Förderbänder od. dgl.**

(57) Eine Abstreifvorrichtung für Förderbänder (1) od. dgl. weist Abstreiflamellen (10) auf, welche in elastisch unter Vorspannung stehenden, quer zur Gurtbandlängsrichtung angeordneten Abstreifhaltern (7) gehalten sind. Dabei verläuft die Kraftrichtung der elastischen Vorspannkraft in Ruhestellung des Förderbandes (1) im wesentlichen senkrecht zur Förderbandoberfläche. Die Abstreifhalter (7) sind sowohl in Gurtbandlängsrichtung als auch in Längsrichtung der Abstreiflamellen (10) auslenkbar gegen eine Rückstelleinrichtung (18) gelagert. Dadurch ergibt sich eine individuelle Anpassung beispielsweise an unterschiedliche abzustreifende Materialien, an unterschiedliche Bewegungsrichtung des Förderbandes (1) und an unterschiedliche Oberflächenbeschaffenheiten des Förderbandes (1). Außerdem werden zweckmäßige Ausgestaltungen beschrieben.

**Fig. 2**

## Abstreifvorrichtung für Förderbänder od. dgl

Die Erfindung betrifft eine Abstreifvorrichtung für Förderbänder od. dgl. in Form von Abstreiflamellen, welche in elastisch unter Vorspannung stehenden, quer zur Gurtbandlängsrichtung angeordneten Abstreifhaltern gehalten sind, wobei die Kraftrichtung der elastischen Vorspannkraft in Ruhestellung des Förderbandes im wesentlichen senkrecht zur Förderbandoberfläche angeordnet ist bzw. verläuft.

Abstreifvorrichtungen dieser Art werden dazu eingesetzt, die nach dem Abwurf eines Fördergutes von dem Förderband noch an dem Förderband haftenden oder klebenden Materialreste abzutrennen, meist im Bereich des Untertrums des Förderbandes. Für die Funktion solcher Abstreifvorrichtungen ist einerseits eine gute Reinigungswirkung der Förderbandoberfläche von Wichtigkeit. Darüber hinaus kommt es aber auch darauf an, da.ß die Abstreifvorrichtung bei einem Auftreten von Hindernissen elastisch ausweicht und in möglichst kurzen Zeiträumen die vorhergehende Reinigungsposition wieder erreicht.

Bei einer aus der DE-OS 32 11 626 bekannten Abstreifvorrichtung weisen die Einzelabstreifeinrichtungen schräg gegen die Laufrichtung des zu reinigenden Förderbandtrums angeordnete Abstreiflamellen auf, und die für den Ausweichvorgang bei Hindernissen erforderliche Elastizität wird dadurch erreicht, daß der Abstreifhalter über jeweils eine Gummitorsionsfeder gelagert ist. Eine individuelle Einstellung der einzelnen Abstreifeinrichtungen auf unterschiedliche Verschleiß- und Dickenzustände und/oder Reparaturstellen des Fördergutbandes ist hierbei schwierig. Weiterhin ist die Reinigungswirkung derartiger Abstreifvorrichtungen bei unterschiedlichen Laufrichtungen des Förderbandes unterschiedlich.

Aus der DE-PS 23 18 497 ist eine Abstreifvorrichtung für Förderbänder bekannt, bei der die Elastizität ebenfalls durch ein einstückig ausgebildetes federndes Element bewirkt wird, welches einem Gummitorsionselement vergleichbar ist.

Aus der GB-OS 20 40 249A ist eine Abstreifvorrichtung der eingangs genannten Art bekannt. Hierbei ist lediglich eine Auf- und Abbewegung des Abstreifhalters in Richtung seiner Ebene möglich.

Der Erfindung liegt die Aufgabe zugrunde, eine Abstreifvorrichtung der eingangs genannten Art zu schaffen, bei der eine möglichst individuelle Einstellung auf die unterschiedlichen Gegebenheiten des Förderbandes und des Materials möglich ist, und welche einen problemlosen, kostengünstigen Betrieb gewährleistet. Die Abstreifvorrichtung soll außerdem montagefreundlich und problemlos zu warten sein.

Zur Lösung dieser Aufgabe ist erfindungsgemäß vorgesehen, daß bei einer Abstreifvorrichtung der eingangs genannten Art die Abstreifhalter sowohl in Gurtbandlängsrichtung als auch in Längsrichtung der Abstreiflamellen auslenkbar gegen eine Rückstelleinrichtung gelagert sind.

Hierbei ist vorteilhaft, daß nicht nur eine Auf- und Abbewegung des Abstreifhalters in Richtung seiner Ebene, sondern zusätzlich dazu eine elastische Auslenkbewegung sowohl quer zum Förderband - zwecks Anpassung an unterschiedliche Bandoberflächen - als auch in die jeweilige Transportrichtung des Förderbandes möglich ist. Somit sind sechs Bewegungsrichtungen möglich, wobei in beliebiger Kombination jeweils bis zu drei Bewegungen gleichzeitig stattfinden können. Dadurch ergibt sich eine individuelle Anpassung beispielsweise an unterschiedliche abzustreifende Materialien, an unterschiedliche Bewegungsrichtungen des Förderban des (Reversierbetrieb) und an unterschiedliche Oberflächenbeschaffenheiten des Förderbandes, welche beispielsweise durch Verschmutzung, Gurtverschleiß, Gurtbeschädigung, unterschiedliche Gurtarten od. dgl. auftreten können.

In besonders vorteilhafter Ausgestaltung der Erfindung können mehrere Einzelabstreifeinrichtungen vorgesehen sein. Da jede dieser Einzelabstreifeinrichtungen die vorgenannten bis zu drei Bewegungen in unterschiedliche Bewegungsrichtungen ausüben kann, ergibt sich dadurch eine ganz besondere individuelle Anpassung an die unterschiedlichen Gegebenheiten des Förderbandes und des Fördergutes.

In weiterer Ausgestaltung der Erfindung kann vorgesehen sein, daß die Einzelabstreifeinrichtungen mittels je einer einzeln einstellbaren Vorspanneinrichtung gegen die Förderbandoberfläche anliegend ausgebildet sind. Dies ermöglicht eine einfache und individuelle Einstellung der Anpreß-Vorspannung jeder Einzelabstreifeinrichtung und damit auch eine individuelle Einstellung für insbesondere höhere Bandgeschwindigkeiten. Weiterhin ist hierbei von Vorteil, daß eine Anpassung an etwa durch ballige Fördertrommeln verformte Gurtoberflächen möglich ist.

In weiterer Ausgestaltung der Erfindung kann vorgesehen sein, daß die Rückstelleinrichtung jeweils als mehrere Bewegungsrichtungen ermöglichendes Element (z.B. Kreuzgelenk) ausgebildet ist. Hierbei ist vorteilhaft, daß aus anderen Industriebereichen bekannte Standardbauelemente eingesetzt werden können, was zu einer besonders preiswerten Lösung führt.

Mit den Gegenständen der Patentansprüche 5 bis 8 wird ein Wenden der Abstreiflamellen nach einem Lösen von dem Abstreifhalter und damit ein mehrfacher Einsatz ermöglicht.

Wenn mehrere Abstreifspitzen auf einer Abstreifseite vorgesehen sind, erreicht man gegenüber bisher bekannten Lösungen eine bessere Abstreifwirkung, auch im Reversierbetrieb.

Vorteilhaft ist, daß eine präzise Nachstellung insbesondere bei gebrauchten Förderbändern möglich ist, da dort, wo es erforderlich ist, eine individuelle Einstellung der Anstellkräfte erfolgen kann.

Nachfolgend werden Ausführungsbeispiele der Erfindung anhand der Zeichnungen erläutert. Es zeigen:

Fig. 1 eine Vorderansicht eines Teils einer Abstreifvorrichtung gemäß der Erfindung;

Fig. 2 eine Seitenansicht einer Einzelabstreifeinrichtung in gegenüber der Darstellung in Fig. 1 vergrößertem Maßstab;

Fig. 3 die Schnittdarstellung des oberen Bereichs eines Abstreifhalters mit einer Abstreiflamelle mit auf gegenüberliegenden Längsseiten angeordneten Abstreifspitzen;

Fig. 4 eine schematische perspektivische Darstellung einer Abstreiflamelle gemäß Fig. 3;

Fig. 5 eine weitere Ausführungsform einer Abstreiflamelle in perspektivischer Darstellung.

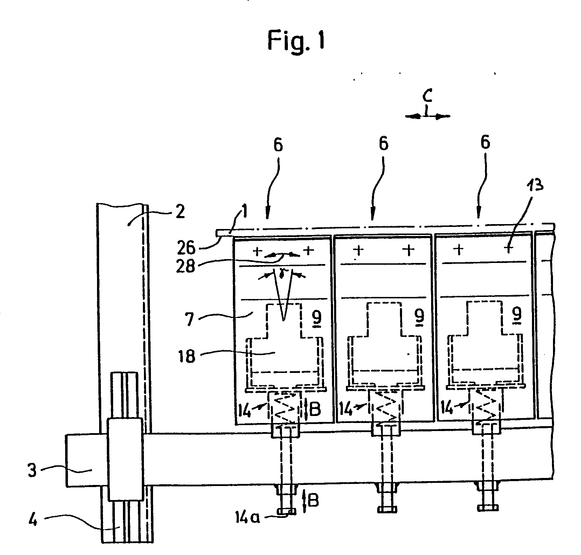

In Fig. 1 ist der Untertrum eines Förderbandes 1 schematisch dargestellt. Die Bewegungsrichtung des Förderbandes ist entsprechend der zeichnerischen Darstellung in die Zeichenebene bzw. aus der Zeichenebene heraus. Seitlich des Förderbandes 1 sind Aufhängerahmen 2 angeordnet, von denen lediglich ein Aufhängerahmen schematisch dargestellt ist. Zwischen den Aufhängerahmen 2 befindet sich unterhalb des Förderbandes 1 ein Tragrohr 3, welches an den Aufhängerahmen 2 in Langlöchern 4 höhenverstellbar angebracht ist.

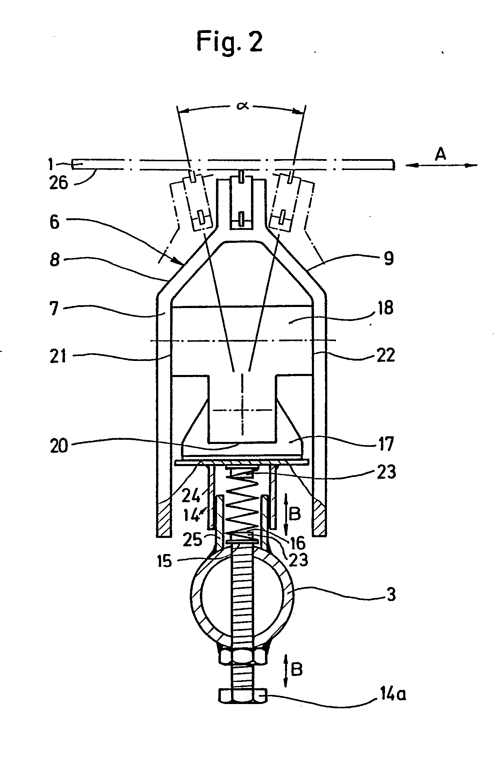

An dem Tragrohr 3 ist eine Abstreifvorrichtung 5 angebracht, welche aus über die Breite des Förderbandes 1 nebeneinander angeordneten Einzelabstreifeinrichtungen 6 besteht. Jede Einzelabstreifeinrichtung weist einen Abstreifhalter 7 mit Verschmutzungsableitern 8 und 9 auf. Die Verschmutzungsableiter 8 und 9 sind, wie aus Fig. 2 ersichtlich, spiegelsymmetrisch quer zur Bewegungsrichtung A des Untertrums des Förderbandes 1 angeordnet.

Die Abstreifhalter 7 weisen oben jeweils Abstreiflamellen 10 mit Abstreifspitzen 11 auf. Die Abstreiflamellen 10 haben Öffnungen 12, welche von lösbaren Befestigungsteilen 13 durchfaßt und damit in den Abstreifhaltern auswechselbar befestigt sind.

Die Abstreifhalter 7 sind jeweils über eine Feder-Vorspanneinrichtung 14 gegenüber dem Tragrohr 3 abgestützt. Das Tragrohr 3 wird von einer als Anpreßelement wirkenden Schraube 14a durchfaßt, welche bei Drehung in Pfeilrichtung B bewegbar ist und die mit ihrem Stirnende 15 gegen das untere Stirnende eines Aufnahmeteils 23 anliegt, welches die Druckfeder 16 aufnimmt und führt und über das obere Stirnende eines zweiten Aufnahmeteils 23 gegen einen mit der Rückstelleinrichtung verbundenen Halter 17 abgestützt ist. Die quer zu dem unteren Stirnende 20 des Kreuzgelenkes 18 liegenden Stirnenden 21 und 22 sind fest mit den Innenseiten des Abstreifhalters 7 bzw. der Verschmutzungsableiter 8 und 9 verbunden. Zwischen dem Stirnende 20 des Kreuzgelenkes 18 und der auch als Dämpf- und Presselement wirkenden Druckfeder 16 sitzt ein Aufnahmeteil 23 einer Hülse 24, in welche eine fest mit dem Tragrohr 3 verbundene Hülse 25 einragt. Bei Drehung der als Anpreßelement wirkenden Schraube 14a wird somit die über die Druckfeder 16 über das Kreuzgelenk 18 auf den Abstreifhalter 7 und damit auf die Abstreiflamelle 10 und letztlich auf die Abstreifspitzen 11 aufgebrachte Anpreßkraft verändert. Die Richtung dieser elastischen Vorspannkraft liegt, wie aus Fig. 2 ersichtlich, in Normalstellung senkrecht bzw. im wesentlichen senkrecht zu der zu reinigenden Förderbandoberfläche 26.

Durch Wirkung des Kreuzgelenkes 18 sind die Abstreifhalter 7 in Längsrichtung des Förderbandes 1, also in Richtung A auslenkbar, und zwar entsprechend Fig. 2 um den Winkel $\alpha$, so daß die Abstreiflamellen die jeweils strichpunktierte Stellung einnehmen können.

Darüber hinaus sind die Abstreifhalter 7 aber auch in Längsrichtung der Lamellen, also in Richtung C und damit in der Ebene 26 quer zur Transportrichtung liegenden Richtung C elastisch auslenkbar. Dies ist in Fig. 1 durch den Doppelpfeil 28 angedeutet. Der Auslenkwinkel ist hier mit $\gamma$ bezeichnet.

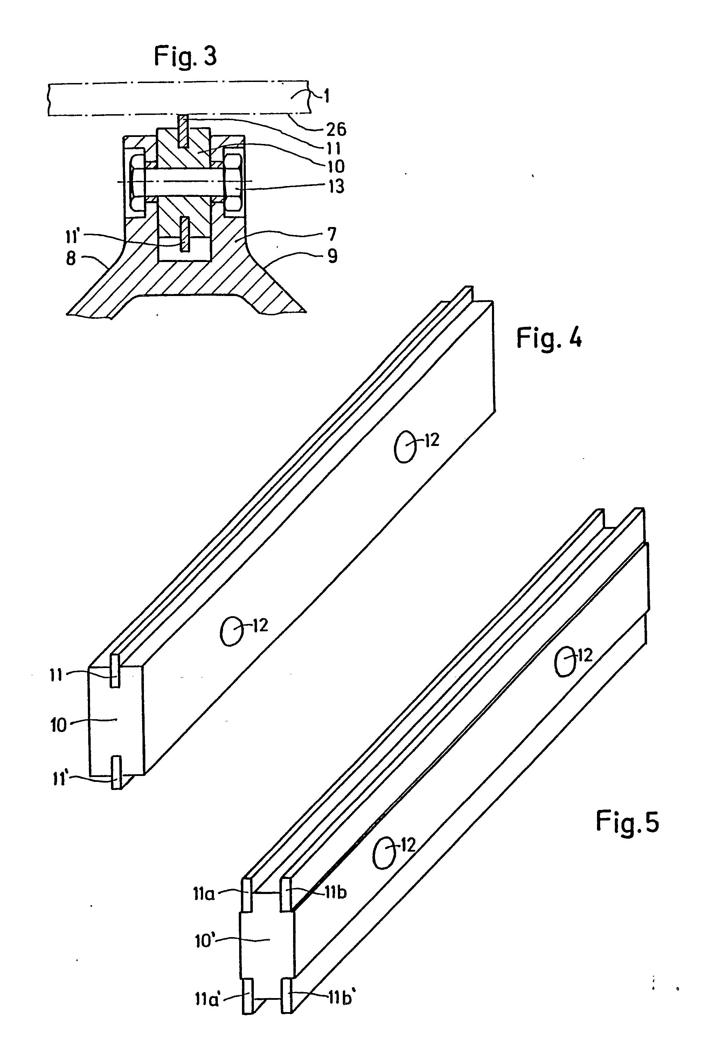

Wie aus Fig. 4 ersichtlich, kann die Abstreiflamelle 10 zusätzlich zu der Abstreifspitze 11 auf der gegenüberliegenden Seite eine weitere Abstreifspitze 11′ aufweisen. Dadurch kann die Abstreiflamelle 10 nach Abnutzen der Abstreifspitze 11 gewendet werden, so daß dann die Abstreifspitze 11′ zum Einsatz kommen kann.

Wie aus Fig. 5 ersichtlich, besteht auch die Möglichkeit, daß die dort mit 10′ bezeichnete Abstreiflamelle auf gegenüberliegenden Längsseiten jeweils parallel angeordnete Abstreifspitzen 11a, 11b bzw. 11a′ bzw. 11b′ aufweist. Somit folgt die Spitze einer Veränderung der Förderbandoberfläche und einer Abnutzung der Abstreiferspitze bei einer stärkeren Verschmutzung ohne gesonderte Nachstellung, sofern die individuell eingestellte Vorspannung ausreichend war.

**Ansprüche**

1. Abstreifvorrichtung für Förderbänder od. dgl. in Form von Abstreiflamellen, welche in elastisch unter Vorspannung stehenden, quer zur Gurtbandlängsrichtung angeordneten Abstreifhaltern gehalten sind, wobei die Kraftrichtung der elastischen Vorspannkraft in Ruhestellung des Förderbandes im wesentlichen senkrecht zur Förderbandoberfläche angeordnet ist bzw. verläuft, dadurch gekennzeichnet, daß die Abstreifhalter (7) sowohl in Gurtbandlängsrichtung (A) als auch in Längsrichtung (C) der Abstreiflamellen (10) auslenkbar gegen eine Rückstelleinrichtung (18) gelagert sind.

2. Abstreifvorrichtung nach Anspruch 1, dadurch gekennzeichnet, daß mehrere Einzelabstreifeinrichtungen (6) vorgesehen sind.

3. Abstreifvorrichtung nach Anspruch 2, dadurch gekennzeichnet, daß die Einzelabstreifeinrichtungen (6) mittels je einer einzeln einstellbaren Vorspanneinrichtung (14) gegen die Förderbandoberfläche (26) anliegend ausgebildet sind.

4. Abstreifvorrichtung nach einem der Ansprüche 1 bis 3, dadurch gekennzeichnet, daß die Rückstelleinrichtung (18) jeweils als mehrere Bewegungsrichtungen ermöglichendes Element (z.B. Kreuzgelenk) ausgebildet ist.

5. Abstreifvorrichtung für Gurtbänder, insbesondere nach einem der Ansprüche 1 bis 4, dadurch gekennzeichnet, daß die Abstreiflamellen (10, 10′) jeweils mehrere Abstreifspitzen (11, 11′ bzw. 11a, 11b bzw. 11a′, 11b′) aufweisen.

6. Abstreifvorrichtung nach Anspruch 5, dadurch gekennzeichnet, daß die Abstreiflamellen (10′) parallel wirkend angeordnete Abstreifspitzen (10a, 10b bzw. 11a′, 11b′) aufweisen.

7. Abstreifvorrichtung nach Anspruch 5 oder 6, dadurch gekennzeichnet, daß die Abstreifspitzen (11, 11′ bzw. 11a, 11b, 11a′, 11b′) auf gegenüberliegenden Längsseiten der Abstreiflamellen (10, 11′) angeordnet sind.

8. Abstreifvorrichtung nach einem der Ansprüche 5 bis 7, dadurch gekennzeichnet, daß die Abstreiflamellen (10, 10′) und die Abstreifspitzen (11, 11′ bzw. 11a, 11b, 11a′, 11b′) einstückig und aus gleichen Werkstoffen bestehend ausgebildet sind.

# Fig. 1

## Fig. 2

Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 181 385 (NIHON TSUSHO) * Insgesamt * & DE-C-2 318 497 (Kat. D) | 1,2,4 | B 65 G 47/16 B 65 G 47/12 |
| Y | | 3,5-7 | |
| Y | EP-A-0 090 985 (HOSCH) * Figur 1; Zusammenfassung; Anspruch 1 * & DE-A-3 211 626 (Kat. D) | 3 | |
| A | | 1 | |
| Y | FR-A-2 308 429 (SOC. LILLEROISE) * Figuren 1-3; Seite 2, Zeile 38 – Seite 4, Zeile 5 * | 5-7 | |

| RECHERCHIERTE SACHGEBIETE (Int. Cl.4) |
|---|
| B 65 G |

Der vorliegende Recherchenbericht wurde für alle Patentansprüche erstellt

| Recherchenort | Abschlußdatum der Recherche | Prüfer |
|---|---|---|
| DEN HAAG | 07-03-1989 | WERNER D.M. |